# FASCICULE DE BREVET EUROPEEN

(11) **EP 1 234 150 B1**
(45) Date de publication et mention de la délivrance du brevet: **17.11.2004**
(21) Numéro de dépôt: 00966268.5
(22) Date de dépôt: 03.10.2000
(51) Int. Cl.: F25D 29/00, F25D 3/11, A23L 3/36, A23L 3/375

(54) **PROCEDE DE REFROIDISSEMENT CRYOGENIQUE DE PRODUITS DE CALIBRE DIFFERENT**
KRYOGENES TIEFKÜHLVERFAHREN FÜR PRODUKTE UNTERSCHIEDLICHEN KALIBERS
METHOD FOR CRYOGENIC COOLING OF PRODUCTS OF DIFFERENT DIMENSIONS

(30) Priorité: 18.11.1999 FR 9914497
(43) Date de publication de la demande: 28.08.2002
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: CLOAREC, Alain, A2Résidence du Moulin Saint-Martin, F-91160 Longjumeau (FR)
(74) Mandataire: Mellul-Bendelac, Sylvie Lisette
(86) Numéro de dépôt international: PCT/FR2000/002742
(87) Numéro de publication internationale: WO 2001/036886

(56) Documents cités:
- EP-A- 0 667 501
- FR-A- 2 760 272
- US-A- 4 142 376
- US-A- 4 745 762
- US-A- 5 331 148
- US-A- 5 816 067
- US-A- 5 946 922

## Description

La présente invention concerne le domaine des installations de refroidissement cryogénique de produits, du genre où l'on fait transiter les produits dans un tunnel cryogénique équipé d'arrivés d'un liquide cryogénique et de moyens aptes à créer une convection de l'atmosphère à l'intérieur du tunnel.

Elle s'intéresse en particulier au « croutage » (raidissage) cryogénique de produits : congélation du produit de façon partielle, au niveau d'au moins une de ses surfaces, le plus souvent avant une opération ultérieure qui peut être une congélation à coeur dans un autre dispositif ou qui peut être également une opération qui n'est pas une congélation telle un tranchage, un enrobage etc........

On pratique de tels refroidissement cryogéniques notamment dans l'industrie alimentaire, et au sein de cette industrie alimentaire on peut citer l'exemple du croutage de saumons avant tranchage.

En considérant ce dernier exemple, on sait que l'opération de croutage cryogénique est tout à fait fondamentale pour raidir la surface du saumon et permettre une bonne qualité de découpe, et éviter ainsi les pertes de matière.

Les utilisateurs de tels procédés de refroidissement cryogénique rencontrent des difficultés quand leur application spécifique les conduit à devoir traiter dans le temps des produits (par exemple des saumons) de calibre différent. On conçoit que cet utilisateur souhaite passer d'un calibre à l'autre sans perte de temps (latence) et sans perte de productivité.

Ceci n'est pourtant pas aisé puisque chaque calibre de produit se caractérise par des dimensions et une masse différentes, et donc nécessairement par un apport frigorifique qui lui est nécessaire différent également.

Un des objectifs de la présente invention est alors de proposer un nouveau concept de procédé de refroidissement cryogénique de produits du genre précité, qui permette dans des conditions dynamiques de traiter tour à tour des produits de calibre différent, tout en maintenant une qualité de refroidissement conforme au cahier des charges requis, et en particulier compatible avec une éventuelle opération ultérieure telle qu'un tranchage.

La présente invention concerne alors un procédé de refroidissement cryogénique de produits, du genre où l'on fait transiter les produits dans un tunnel cryogénique équipé d'arrivées d'un liquide cryogénique ainsi que de moyens aptes à créer une convection de l'atmosphère à l'intérieur du tunnel, remarquable en ce que l'on traite des produits de calibres (Ci) différents de la façon suivante :
- à un instant donné, le tunnel traite des produits de calibre Cx, tout ou partie des arrivées de liquide cryogénique et moyens de création d'une convection étant en service ;
- un produit de calibre Cy se présente ultérieurement à l'entrée du tunnel, et déclenche l'émission d'un signal de détection (TOP) ;
- pendant une durée Dxy =TOP + Txy, le tunnel fonctionne selon un mode intermédiaire, Txy correspondant au temps où des produits de calibre Cx et Cy coexistent dans le tunnel ;
- le mode intermédiaire se caractérisant en ce que à un temps TOP + Δt, où Δt est inférieur à Txy, ledit produit de calibre Cy s'étant présenté à l'entrée du tunnel rencontre, à l'intérieur du tunnel, la première desdites arrivées de liquide cryogénique, et en ce que l'on procède alors aux actions suivantes :
   i) dans le cas où Cy<Cx : on coupe certains desdits moyens et/ou certaines desdites arrivées ;
   j) dans le cas où Cy>Cx : on remet en service certains desdits moyens et/ou certaines desdites arrivées.

Le procédé selon l'invention peut par ailleurs adopter l'une ou plusieurs des caractéristiques suivantes :
- le calibre Cy est inférieur au calibre Cx, et on procède alors, dans le cadre de l'action i), à une coupure de une ou plusieurs arrivées de liquide cryogénique dans la première moitié du tunnel ;
- le calibre Cy est supérieur au calibre Cx, et on procède alors, dans le cadre de l'action j), à une remise en service de une ou plusieurs arrivées de liquide cryogénique dans la première moitié du tunnel ;
- le refroidissement cryogénique effectué permet de réaliser une congélation partielle du produit au niveau d'au moins une de ses surfaces ;
- les produits traités sont des produits alimentaires ;
- les produits traités sont des saumons, et le refroidissement cryogénique effectué permet de réaliser une congélation partielle du produit en surface (au niveau d'au moins une de ses surfaces), avant une opération ultérieure de tranchage.

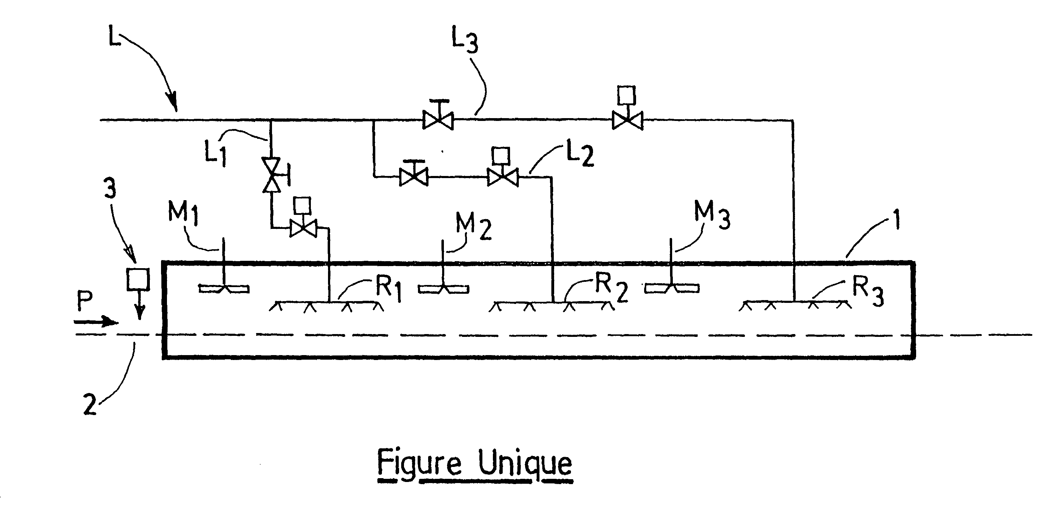

D'autres caractéristiques et avantages ressortiront de la description suivante donnée uniquement à titre d'exemple et faite en référence aux dessins annexés sous la forme d'une figure unique qui est une représentation schématique d'une installation de refroidissement cryogénique de produits, ici de croutage de saumons avant une opération ultérieure de tranchage, permettant la mise en oeuvre du procédé selon l'invention.

On reconnaît sur la figure la présence d'un tunnel 1, qui est muni d'arrivés d'azote liquide (lignes Lᵢ et rampes de projection Rᵢ) et de moyens aptes à créer une convection de l'atmosphère à l'intérieur du tunnel (ici des ventilateurs Mᵢ).

On voit par ailleurs sur la figure la présence d'un tapis 2, apte à convoyer les produits P à l'intérieur du tunnel.

On note que le tunnel est muni au voisinage de son entrée (que ce soit à l'extérieur ou à l'intérieur du tunnel) d'un système 3 de détection de l'arrivée d'un produit.

On peut alors décrire le fonctionnement de l'installation de la façon suivante :
- considérons qu'à un instant donné, le tunnel traite des produits de calibre Cx, toutes les arrivées R₁ , R₂ et R₃ de liquide cryogénique étant en service, ainsi que les 3 systèmes de ventilation Mᵢ;
- un produit de calibre Cy (Cy<Cx) se présente ultérieurement à l'entrée du tunnel, et déclenche, grâce au système 3, l'émission d'un signal de détection (TOP) ;
- pendant une durée Dxy =TOP + Txy, le tunnel fonctionne selon un mode intermédiaire, Txy correspondant au temps où des produits de calibre Cx et Cy coexistent dans le tunnel 1 (donc temps s'écoulant avant que le dernier saumon de calibre Cx ait quitté le tunnel);
- pour mieux concevoir et visualiser ce régime intermédiaire, considérons qu'au temps TOP + Δt, où Δt est inférieur à Txy, le produit de calibre Cy qui vient de se présenter à l'entrée du tunnel rencontre, à l'intérieur du tunnel, la première arrivée de liquide cryogénique (par exemple pour le mode de réalisation représenté le début de la rampe R₁),
- à l'instant de cette rencontre, on déclenche (grâce à un autre système de détection cette fois interne au tunnel et non représenté sur la figure) la coupure de certains des ventilateurs et/ou certaines des arrivées de liquide cryogénique (par exemple, selon le ratio des calibres Cx et Cy on coupe les deux rampes R₁ et R₂).

On conçoit alors qu'étant en régime de croisière où le tunnel traite des saumons de calibre Cy, et qu'un produit de calibre Cz (Cy<Cz) se présente ultérieurement à l'entrée du tunnel, on procédera ici selon le même type de démarche à une remise en service de certaines des arrivées de liquide cryogénique (R1 et/ou R2) selon le ratio des calibres Cy et Cz.

On comprend alors à la lumière de ce qui précède que le procédé selon l'invention repose sur une adaptation en ligne de l'apport de froid, en jouant sur le transfert de frigories à l'intérieur du tunnel :
- sur la quantité de liquide cryogénique à transférer (en menant une action sur le nombre de rampes d'azote liquide en service) et/ou
- sur l'efficacité du transfert (en menant une action sur le nombre de ventilateurs en service).

En considérant le cas évoqué plus haut où l'arrivée d'un saumon de calibre Cy<Cx à l'entrée du tunnel déclenche la coupure de la rampe R₁ ou des rampes R₁ et R₂ , on comprend mieux que l'on simule ainsi « artificiellement » une zone froide plus courte pour ce produit Cy de calibre moindre, qui a donc besoin de moins de frigories pour répondre au cahier des charges de l'utilisateur.

On préfère selon l'invention procéder aux coupures (ou remises en service) des arrivées de liquide cryogénique ou ventilateurs, dans la première moitié du tunnel, cela pour limiter la perturbation qu'entraîne ces actions sur les saumons de calibre différents qui étaient présents dans le tunnel auparavant et qui terminent leur traitement.

On peut alors qualifier le mode « intermédiaire » de fonctionnement d'un mode « dégradé » ou « mode de compromis », pour que, sans perdre en aucune façon du temps au changement de calibre, on puisse passer continûment d'un calibre à l'autre tout en évitant qu'un produit soit trop ou trop peu croûté, et donc ne puisse être correctement tranché en aval.

Quoique la présente invention ait été décrite en relation avec des modes de réalisations particuliers, elle ne s'en trouve pas limitée pour autant mais est au contraire susceptible de modifications et de variantes qui apparaîtront à l'homme de l'art, tout en demeurant dans le cadre de la présente invention.

Ainsi par exemple, si la description précédente s'est intéressée tout particulièrement au cas des produits alimentaires, et au sein de ces produits alimentaires au cas des saumons, on conçoit que de tels procédés de refroidissement cryogénique s'appliquent beaucoup plus largement à de nombreuses industries, notamment plastiques.

De même, si les modes de réalisation décrit plus haut se sont intéressés à des réalisations particulières des arrivés de liquide cryogénique (ex : rampes) ainsi que des moyens aptes à créer une convection de l'atmosphère (ventilateurs), l'homme du métier des gaz et des appareillages de refroidissement cryogénique sait qu'il dispose de bien d'autres formes de réalisation de tels moyens, sans que le passage de l'un à l'autre de ses moyens ne puisse changer le fonctionnement et la finalité profonde de la méthode présentement revendiquée.

## Revendications

1. Procédé de refroidissement cryogénique de produits (P), du genre où l'on fait transiter les produits dans un tunnel cryogénique (1) équipé d'arrivés (Lᵢ/Rᵢ) d'un liquide cryogénique ainsi que de moyens (Mᵢ) aptes à créer une convection de l'atmosphère à l'intérieur du tunnel , **caractérisé en ce que** l'on traite des produits de calibres (Ci) différents de la façon suivante :
- à un instant donné, le tunnel traite des produits de calibre Cx, tout ou partie des arrivées de liquide cryogénique et des moyens de création d'une convection étant en service ;
- un produit de calibre Cy se présente ultérieurement à l'entrée du tunnel, et déclenche l'émission d'un signal de détection (TOP) ;
- pendant une durée Dxy =TOP + Txy, le tunnel fonctionne selon un mode intermédiaire, Txy correspondant au temps où des produits de calibre Cx et Cy coexistent dans le tunnel ;
- le mode intermédiaire **se caractérisant en ce que** à un temps TOP + Δt, où Δt est inférieur à Txy, ledit produit de calibre Cy s'étant présenté à l'entrée du tunnel rencontre, à l'intérieur du tunnel, la première desdites arrivées de liquide cryogénique, et **en ce que** l'on procède alors aux actions suivantes :
i) dans le cas où Cy<Cx : on coupe certains desdits moyens et/ou certaines desdites arrivées ;
j) dans le cas où Cy>Cx : on remet en service certains desdits moyens et/ou certaines desdites arrivées.

2. Procédé selon la revendication 1, **caractérisé en ce que** le calibre Cy est inférieur au calibre Cx, et **en ce que** l'on coupe une ou plusieurs arrivées de liquide cryogénique dans la première moitié du tunnel.

3. Procédé selon la revendication 1, **caractérisé en ce que** le calibre Cy est supérieur au calibre Cx, et **en ce que** l'on remet en service une ou plusieurs arrivées de liquide cryogénique dans la première moitié du tunnel.

4. Procédé selon l'une des revendications 1 à 3, **caractérisé en ce que** le refroidissement cryogénique effectué permet de réaliser une congélation partielle du produit au niveau d'au moins une de ses surfaces.

5. Procédé selon l'une des revendications 1 à 4, **caractérisé en ce que** les produits traités sont des produits alimentaires.

6. Procédé selon la revendication 5, **caractérisé en ce que** les produits traités sont des saumons, et **en ce que** le refroidissement cryogénique effectué permet de réaliser une congélation partielle du produit au niveau d'au moins une de ses surfaces, avant une opération ultérieure de tranchage.

## Patentansprüche

1. Verfahren zur Tiefsttemperaturkühlung von Produkten (P) der Art, bei der die Produkte einen Tiefsttemperaturtunnel (1) durchlaufen, der mit Einlässen (Lᵢ/Rᵢ) für eine Tiefsttemperaturflüssigkeit sowie mit Mitteln (Mᵢ) versehen ist, die eine Konvektion der Atmosphäre im Innern des Tunnels erzeugen können, **dadurch gekennzeichnet, dass** Produkte unterschiedlichen Formats (Ci) auf folgende Weise behandelt werden:
- zu einem gegebenen Zeitpunkt behandelt der Tunnel Produkte vom Format Cx, wobei alle oder ein Teil der Einlässe für Tiefsttemperaturflüssigkeit und der Mittel zur Erzeugung einer Konvektion in Betrieb sind,
- ein Produkt vom Format Cy erreicht später den Eingang des Tunnels und löst die Aussendung eines Erfassungssignals (TOP) aus,
- während einer Dauer Dxy = TOP + Txy arbeitet der Tunnel in einem Zwischenmodus, wobei Txy der Zeit entspricht, während der Produkte vom Format Cx und Cy gemeinsam im Tunnel vorhanden sind,
- wobei der Zwischenmodus **dadurch gekennzeichnet ist, dass** zu einem Zeitpunkt TOP + Δt, wobei Δt kleiner als Txy ist, das Produkt vom Format Cy, das den Eingang des Tunnels erreicht hatte, im Innern des Tunnels auf den ersten der Einlässe für Tiefsttemperaturflüssigkeit trifft und dass dann folgende Vorgänge erfolgen:
i) für den Fall, dass Cy < Cx: es werden bestimmte Mittel und/oder bestimmte Einlässe abgeschaltet,
j) für den Fall, dass Cy > Cx: es werden bestimmte Mittel und/oder bestimmte Einlässe wieder in Betrieb genommen.

2. Verfahren nach Anspruch 1, **dadurch gekennzeichnet, dass** das Format Cy kleiner als das Format Cx ist und dass einer oder mehrere der Einlässe für Tiefsttemperaturflüssigkeit in der ersten Hälfte des Tunnels abgeschaltet werden.

3. Verfahren nach Anspruch 1, **dadurch gekennzeichnet, dass** das Format Cy größer als das Format Cx ist und dass einer oder mehrere der Einlässe für Tiefsttemperaturflüssigkeit in der ersten Hälfte des Tunnels wieder in Betrieb genommen werden.

4. Verfahren nach einem der Ansprüche 1 bis 3, **dadurch gekennzeichnet, dass** die durchgeführte Tiefsttemperaturkühlung es erlaubt, ein teilweises Gefrieren des Produkts auf Höhe zumindest einer seiner Oberflächen durchzuführen.

5. Verfahren nach einem der Ansprüche 1 bis 4, **dadurch gekennzeichnet, dass** die behandelten Produkte Nahrungsmittel sind.

6. Verfahren nach Anspruch 5, **dadurch gekennzeichnet, dass** die behandelten Produkte Lachse sind und dass die durchgeführte Tiefsttemperaturkühlung es erlaubt, vor einem späteren Tranchieren ein teilweises Gefrieren des Produkts auf Höhe zumindest einer seiner Oberflächen durchzuführen.

## Claims

1. Process for the cryogenic cooling of products (P), of the type in which the products are passed through a cryogenic tunnel (1) equipped with inlets (Lᵢ/Rᵢ) for a cryogenic liquid and with means (Mᵢ) for creating convection in the atmosphere inside the tunnel, **characterized in that** products of different sizes (Ci) are processed in the following way:
- at a given instant, the tunnel processes products of size Cx, all or some of the cryogenic-fluid inlets and the means for creating convection being turned on;
- a product of size Cy is subsequently presented to the entrance of the tunnel, and triggers the emission of a detection signal (TOP);
- for a period Dxy = TOP + Txy, the tunnel operates in an intermediate mode, Txy corresponding to the time when products of size Cx and Cy coexist in the tunnel;
- the intermediate mode being **characterized in that**, at a time TOP + Δt, where Δt is less than Txy, the said product of size Cy presented to the entrance of the tunnel encounters, inside the tunnel, the first of the said cryogenic-liquid inlets, and **in that** the following actions are then carried out:
i) in the case when Cy < Cx: some of the said means and/or some of the said inlets are turned off;
j) in the case when Cy > Cx: some of the said means and/or some of the said inlets are turned back on.

2. Process according to Claim 1, **characterized in that** the size Cy is less than the size Cx, and **in that** one or more cryogenic-fluid inlets in the first half of the tunnel are turned off.

3. Process according to Claim 1, **characterized in that** the size Cy is greater than the size Cx, and **in that** one or more cryogenic-liquid inlets in the first half of the tunnel are turned back on.

4. Process according to one of Claims 1 to 3, **characterized in that** the cryogenic cooling which is carried out makes it possible to freeze the product partially on at least one of its surfaces.

5. Process according to one of Claims 1 to 4, **characterized in that** the products processed are food products.

6. Process according to Claim 5, **characterized in that** the products processed are salmon, and **in that** the cryogenic cooling which is carried out makes it possible to freeze the product partially on at least one of its surfaces prior to a subsequent cutting operation.
